# EUROPÄISCHE PATENTSCHRIFT

(11) **EP 0 575 715 B1**
(45) Veröffentlichungstag und Bekanntmachung des Hinweises auf die Patenterteilung: **15.10.1997**
(21) Anmeldenummer: 93105644.4
(22) Anmeldetag: 06.04.1993
(51) Int. Cl.: H02H 9/02

(54) **Verfahren und Vorrichtung zur Einschaltstromstoss-Vermeidung**
Procedure and equipment for avoiding inrush currents
Procédé et dispositif pour éviter des courants d'entrée

(30) Priorität: 29.05.1992 DE 4217866
(43) Veröffentlichungstag der Anmeldung: 29.12.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: Konstanzer, Michael, Dipl.-Ing. (FH), W-7800 Freiburg (DE)

(56) Entgegenhaltungen:
- WO-A-91/17597
- DE-A- 4 011 170
- DE-A- 4 013 888
- DE-A- 4 019 592
- DE-A- 4 108 106
- DE-B- 2 743 365
- DE-C- 4 132 208

## Beschreibung

Die Erfindung betrifft ein Verfahren zur Einschaltstromstoß-Vermeidung nach dem Oberbegriff des Anspruchs 1 sowie eine Vorrichtung zur Durchführung des Verfahrens nach dem Oberbegriff des Anspruchs 3. Ein solches Verfahren und eine solche Vorrichtung sind aus der WO-A-91/17597 bekannt.

Bei bisherigen Einschaltverfahren treten die Schaltkreise belastende oder sogar zerstörende Einschaltspitzenströme auf, die in ihrer Polarität unsymmetrisch sind. Die WO-A-91/17597 (oder auch die DE-PS 40 19 592) löst diese Probleme, indem mit bevorzugter weise unipolaren Spannungsabschnitten mit stetig größer werdenden Spannungsabschnitten eingeschaltet wird. Dabei wird durchgehend die Antwort des Transformators gemessen, indem die Blindstrompulse erfaßt werden. Bei Auftreten eines derart erfaßten kleinen Einschaltspitzenblindstroms wird der Transformator gegenphasig voll eingeschaltet.

Diese Vorrichtung weist den Nachteil auf, daß eine viele Elemente umfassende Abtastschaltung vorgesehen sein muß, die diese Vorrichtung bei Großserieneinsätzen aufwendig macht.

Ausgehend von diesem Stand der Technik liegt der Erfindung die Aufgabe zu Grunde, ein Verfahren und eine Vorrichtung der eingangs genannten Art zu schaffen. die es gestatten, ein induktivitätsbehaftetes Stromversorgungsgerät mit angeschnittenen Netzhalbwellen zu speisen und in einfacherer und weniger aufwendigen Weise zu gewährleisten, daß ein eine Sicherung zerstörender und die Schaltung gefährdender Einschaltspitzenstrom sicher vermieden wird.

Diese Aufgabe wird erfindungsgemäß durch ein Verfahren mit den Merkmalen des Anspruchs 1 gelöst.

Durch die Verwendung von im Periodenabstand aufeinander folgenden, unipolaren angeschnittenen Halbwellen, deren Winkelwert konstant ist, wird das induktivitätsbehaftete Stromversorgungsgerät unabhängig von der ursprünglichen Einschalt-Phasenlage und Lage der Remanenz im Transformator, langsam in eine definierte und von der Schaltung erwartete Lage der Remanenz gebracht. Die Anzahl der Anschnitte wird dabei so groß gewählt, daß bei positiv gepolten Spannungsabschnitten eine negative Remanenz sicher in eine positive Remanenz verschoben werden kann. Eine entsprechende Umpolung ist bei der Wahl von negativen Spannungsabschnitten vorzusehen.

Somit treten nach einer von der Bauart und Lage der Remanenz des Stromversorgungsgerätes abhängigen Anzahl von angeschnittenen Halbwellen kleine und die Schaltung nicht gefährdende Blindströme auf. Wenn die Remanenz eine umgekehrte Polung aufweist, so treten diese Blindströme in keinem oder nur in dem oder den letzten Abschnitten auf, während ein bereits eine die gleiche Polung aufweisende Remanenz zu einem Auftreten von Blindströmen über fast die gesamte Setzzeit führen.

Dabei wird vermieden, den bei der Aufmagnetisierung entstehenden Blindstrom als Zeichen der beginnenden Sättigung zu erfassen.

Durch das erfindungsgemäße Verfahren ist es nun aber möglich, eine sehr einfache und in ihrer Schlichtheit trickreiche Schaltung zu verwenden. Die oben genannte Aufgabe wird nämlich für eine zur Durchführung des Verfahrens geeignete Vorrichtung zur Einschaltstromstoß-Vermeidung gemäß Anspruch 3 gelöst.

Die Anzahl der Abschnitte und die Größe des zu verwendenden unipolaren Anschnittwinkels ist jeweils von dem induktivitätsbehafteten Stromversorgungsgerät abhängig. Je größer der Spannungsabschnitt, um so weniger Abschnitte sind notwendig, um einen mit invertierter Remanenz beginnenden Transformator in die zur Anschaltung geeigneten Remanenz zu führen. Eine Verwendung eines größeren Abschnitts führt bei Erreichen der Remanenz dann aber auch zu höheren Blindströmen, so daß ein Kompromiß zwischen den beiden Größen gewählt werden muß.

Der Verzicht auf eine Schaltung zur Detektion eines Überstromes gestattet es, eine andere und sehr einfache Schaltung zu verwenden, insbesondere im Vergleich zur DE-PS 40 19 592, was insbesondere in der Großserienfertigung zu Bauteil- und Fertigungs-Einsparungen führt. Diese Einsparungen sind möglich, weil in der Großserie die Art des anzuschaltenden induktivitätsbehafteten Stromversorgungsgerätes bekannt ist und daher die genannten Größen Winkel und Anzahl der Abschnitte sicher fest voreinstellbar sind.

Weitere vorteilhafte Ausgestaltungen der Erfindung sind in den Unteransprüchen gekennzeichnet.

Nachfolgend wird ein Ausführungsbeispiel der Erfindung anhand der Zeichnungen beispielhaft näher erläutert. Es zeigen:
- Fig. 1: ein Blockschaltbild einer Vorrichtung zur Begrenzung von Einschaltstromspitzen auf der Primärseite eines Transformators gemäß einem Ausführungsbeispiel der Erfindung, und
- Fig. 2: Signalkurven der Netzspannung sowie des Netzstromes bei dem Einschalten des Transformators mit einer Vorrichtung nach Fig. 1.

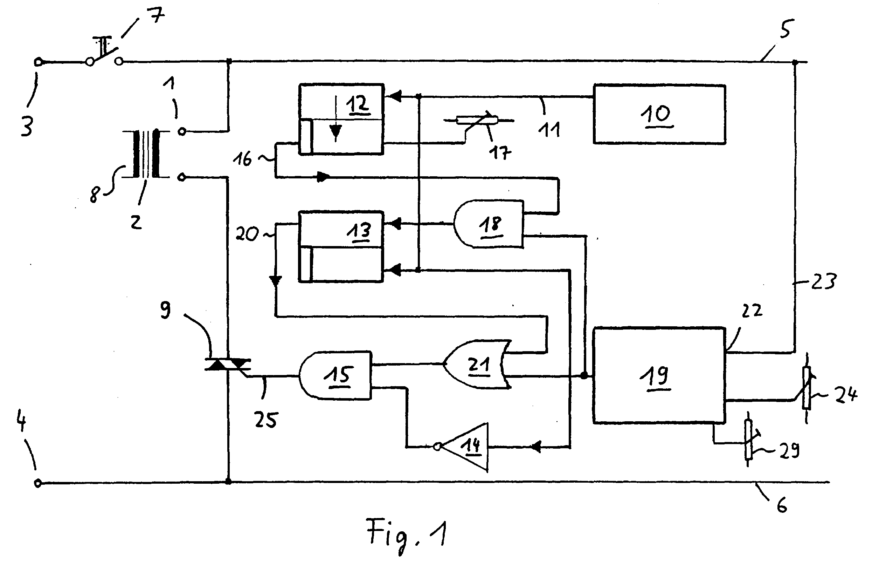

Die Fig. 1 zeigt ein Blockschaltbild einer Vorrichtung zur Begrenzung von Einschaltstromspitzen auf der Primärseite 1 eines Transformators 2 gemäß einem Ausführungsbeispiel der Erfindung. Der Transformator 2 stellt ein mögliches induktivitätsbehaftetes Stromversorgungsgerät dar, welches z.B. auch durch eine induktive Last gebildet werden kann.

Die an Kontakten 3, 4 anliegende Netzspannung speist ein vorteilhafterweise eisenloses Netzteil, welches die positive Betriebsspannung, die in der Fig. 1 nicht dargestellt ist, für die in der Fig. 1 dargestellte Schaltung bereitstellt. Der Steckkontakt 4 ist mit Schaltungsmasse 6 verbunden, während der andere Steckkontakt 3 zum einen über einen Netzschalter 7 an die Netzspannung 5 und zum anderen an die Primärwicklung 1 des Transformators 2 führt, an den sekundärseitig eine Last 8 anschaltbar ist.

Der zweite primärseitige Steckkontakt des Transformators 2 ist über einen Wechselstromschalter 9 in Gestalt eines Triacs, an dessen Stelle auch zwei Thyristoren eingesetzt werden können, an Schaltungsmasse 6 gelegt.

Eine Spannungsversorgungserkennung 10 erzeugt ein schnelles und dynamisches Netz-Ein-Erkennungssignal, wenn der Netzschalter 7 geschlossen wird. Dieses Signal wird über eine Steuerleitung 11 herausgeführt und sorgt in unten auszuführender Weise insbesondere dafür, daß der Wechselstromschalter 9 erst eingeschaltet wird, wenn alle Schaltungskomponenten eine gesicherte Stromversorgung aufweisen.

Zum einen beaufschlagt dieses Signal den Reset-Eingang eines Zeitglied 12, z.B. in Gestalt eines Mono-Flops, und setzt diesen zurück. Weiter wird mit diesem Signal ein Flip-Flop 13 zurückgesetzt und ein eventueller Schaltvorgang verhindert und schließlich wird über einen Inverter 14 ein UND-Gatter 15 beschaltet, so daß während der ersten z.B. 20 Millisekunden anliegender Spannung das UND-Gatter 15 als Freigabe- und Sperrgatter ein Anschalten des Wechselstromschalters 9 wirkungsvoll verhindert.

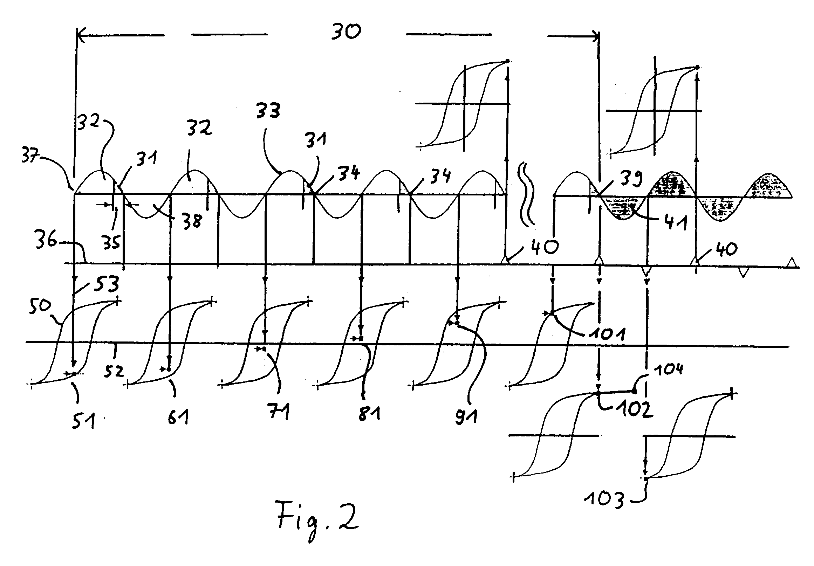

Während dieser Anlaufzeit der Schaltung schaltet das Zeitglied 12 seinen invertierten Ausgang 16 auf ein Pegel-Null-Signal und hält dieses. Dieses Signal besteht über eine in der Fig. 2 dargestellte Zeitdauer 30, die mit Hilfe eines Einstellpotentiometers 17 einstellbar ist. Neben der dargestellten Verwendung eines Mono-Flops 12 kann auch jede einfache RC-Kombination verwendet werden, die einen zeitlichen Spannungsverlauf aufweist, die ein Unter- bzw. Überschreiten einer Schaltschwelle gestattet.

Das für die vorbestimmte Zeit 30 anliegende Pegel-Null-Signal wird in einem UND-Gatter 18 mit dem Ausgangssignal einer Anschnittsteuerschaltung 19 verbunden. Das an dieses UND-Gatter 18 angeschlossene Schaltglied 13 kann jedoch erst nach Ablaufen der oben genannten Zeitdauer 30 umschalten.

Bis dahin beaufschlagt das von Anschnittsteuerschaltung 19 erzeugte Signal ein mit dem Ausgang 20 des Flip-Flops 13 verbundenes ODER-Gatter 21, welches dann über das bereits erwähnte Einschalt-Schutz-Gatter 15 mit dem Zündeingang des Wechselstromschalters 9 verbunden ist.

Die Anschnittsteuerschaltung 19 kann z.B. durch den integrierten Schaltkreis TCA 785 der Firma Siemens realisiert sein. Der Synchronisationseingang 22 der Anschnittsteuerschaltung 19 ist über eine Leitung 23 mit der Netz-Betriebsspannung 5 verbunden.

Mit der Anschnittsteuerschaltung 19 ist ein Pegel-Eins-Signal für einen konstanten unipolaren Abschnitt 31 erzeugbar, wie er in der Fig. 2 dargestellt ist. Der hier dargestellte positive Abschnitt 31 kann natürlich in anderen Ausgestaltungen der Erfindung auch invertiert sein, wobei dann die anderen Komponenten entsprechend angepaßt sein müssen. Vorzugsweise ist ein in den Fig. nicht dargestellter RC-Schaltkreis vorgesehen, der insbesondere aus einer Parallelschaltung von einem Widerstand und einem Kondensator aufgebaut ist, und eine einige Winkelgrade vorauseilende Netzspannung an dem Synchronisationseingang 22 der Anschnittsteuerschaltung 19 simuliert, damit die Thyristorfreiwerdezeit am Ende jeder Netzhalbwelle kompensiert wird und deshalb das Zündsignal etwas vor der eigentlichen Netzhalbwelle endet.

In der Anschnittsteuerschaltung 19 ist z.B. ein Rampengenerator vorgesehen. Die maximale Spannung und das Abfallverhalten der z.B. in Sägezahnform vorliegenden Signalrampen ist mit dem Rampenwiderstandspotentiometer 24 einstellbar, wobei ein Impuls jeweils nach Über- oder Unterschreiten der Rampe erzeugt wird.

Ein Impuls wird dabei jeweils nur unipolar erzeugt, wobei die Impulsdauer derart definiert wird, daß die Impulslänge immer bis zum Nulldurchgang der gerade anliegenden Halbwelle 32 verlängert wird. Da mit den Schaltimpulsen auf der Leitung 25 der Triac 9 gezündet wird und verhindert werden muß, daß ein noch im Nulldurchgang der Netzwechselspannung 33 vorliegender Impuls auf der Leitung 25 den Triac 9 zünden kann, ist der eine vorauseilende Netzspannung 33 simulierende RC-Schaltkreis vor dem Synchronisationseingang 22 der Anschnittsteuerschaltung 19 angeordnet worden. Somit endet der auf der Leitung 25 anliegende Impuls sicher einige Grad vor jedem Nulldurchgang 34 der Netzwechselspannung 33.

Somit werden nach dem Ablaufen der durch die Spannungsversorgungserkennung 10 vorgegebenen Startzeit für die Dauer der durch das Zeitglied 12 vorgegebenen Zeit unipolare Zündsignale zu einem bestimmten von der Anschnittsteuerschaltung 19 erzeugten Winkel 35 auf den Wechselstromschalter 9 gegeben, womit für die durch den Winkel 35 vorgegebene Zeit in jeder zweiten Halbwelle der Transformator 2 an das Netz angeschlossen wird.

Die Wirkungsweise dieser Anschaltung ist einfacher im Zusammenhang mit der Fig. 2 zu erläutern.

Die Fig. 2 zeigt Verläufe der Netzspannung 33 und des primärseitigen Stroms 36 beim Einschalten des Transformators 2.

Die sinusförmige Kurve 33 zeigt die Netzwechselspannung, die zu einem beliebigen Zeitpunkt ausgeschaltet wird, der insbesondere auch mit dem Ende einer Halbwelle nicht zusammenfallen muß. In der Fig. 2 bedeutet die Schraffur zwischen Abszisse und der Kurve 33, daß die Netzspannung von dem Spannungsnetzgerät erfaßt wird und somit an der primärseitigen Wicklung des Transformators 2 anliegt.

Nach dem zufälligen Zeitpunkt des Ausschaltens der Netzspannung 33 wird der Transformator 2 vor dem Ende der positiven Halbwelle 32 der Netzspannung 33 eingeschaltet, welche zu einem Zeitpunkt 37 beginnt.

Die Hysteresekurve 50 des Transformators 2, d.h. das Induktions-Feldstärke-Diagramm, weist beim Einschalten einen Punkt 51 auf, der die von dem Ausschalten herrührende Remanenz anzeigt. In dem in der Fig. 2 dargestellten Fall weist der Transformator 2 eine negative Remanenz 51 auf. Die Anschnittsteuerschaltung 19 schaltet in der positiven Halbwelle 32 den Spannungsabschnitt 35 auf den Transformator 2 durch. Der Spannungsabschnitt 35 ist vor dem Übergang der positiven Halbwelle 32 in die negative Halbwelle 38 angeordnet. Dadurch wird die Feldstärke 52 in den positiven Bereich erhöht, wobei sich gleichzeitig die Induktion 53 in Richtung positiverer Werte verändert. Nach Beendigung der Halbwelle 32 und damit dem Ende der Anschaltung des Spannungsabschnitts 35 kehrt der Magnetisierungszustand im Eisen des Transformators in eine Remanenz 61 zurück, die eine etwas höhere und in positive Richtung verschobene Induktion 53 aufweist.

Dieser Vorgang ist nicht mit dem Auftreten eines Blindstroms 36 verbunden.

In den darauffolgenden positiven Halbwellen 32 wiederholt sich der beschriebene Vorgang, so daß nach Durchlaufen der beschriebenen Kurve, bei der die Feldstärke 52 zusammen mit der Induktionsdichte 53 ansteigt, jeweils die Remanenz 71, 81 und 91 etwas positiver ist als zuvor. Nach hier z.B. fünf Vollwellen hat die Remanenz 91 fast die Betriebsmagnetisierungskurve 50 erreicht. Bei jedem folgenden Abschnitt 35 läuft sie dann auf der Hysteresekurve 50, wobei sie von der Remanenz 101 ausgehend dann jeweils bei Beendigung des Abschnitts 35, d.h. dem Nulldurchgang 39, in der maximalen Betriebsinduktion 102 ist, d.h. eine Sättigungsfeldstärke 104, die der maximalen Betriebsstrominduktion entspricht, erreicht ist. Dabei tritt dann jedesmal ein Blindstrom 40 auf, der die Schaltung und den Verbraucher nicht gefährdet, weil er dem Leerlaufstrom einer induktiven Last entspricht.

Nachdem die Zeitdauer 30 abgelaufen ist, schaltet das Zeitglied 12 während des Auftretens eines Abschnitts 35 zurück und das Flip-Flop 13 schaltet durch, so daß bei dem Nulldurchgang 39 und allen folgenden Nulldurchgängen an dem Wechselstromschalter 9 ein Zündsignal anliegt, so daß der Verbraucher im Bezug auf die letzte positive Halbwelle 32 in der folgenden Gegenphase 41 voll angeschaltet wird. Dabei durchläuft dann der Magnetisierungszustand des Eisens im Transformator 2 die Hysterese-Kurve bis zur negativen Betriebsinduktion 103 und zurück.

Nach jeder Spannungszeitflächenbeaufschlagung des Transformators 2 erhöht sich die Remanenz 51 etwas zu positiveren Werten hin, bis sie über die Zwischenpunkte 61, 71, 81, 91 und 101 in die positive maximale Betriebsinduktion 102 läuft. Dabei erhöht sich die Remanenz 51 etc. durch eine Erhöhung der Feldstärke, die in der Art einer magnetischen Feder in der Ruhezeit bis zum nächsten Abschnitt 35 wieder zurückgeht und dabei, weil von einer höheren Induktion 53 ausgehend auch zu einer höheren Remanenz 61 etc. gelangt. Die bei einer Wechselspannung von 50 Hertz verbleibende Ruhezeit von z.B. 15 Millisekunden ist mehr als ausreichend, damit die Magnetisierung in den Remanenzpunkt auf der Achse 52 zurückwandern kann. Die genannte Anschaltdauer von 5 Millisekunden entspricht einem Anschnittwinkel von 90 Grad.

Der jeweilige Abschnitt 35 weist dabei eine vorbestimmte Größe auf, mit dem bei dem vorgegebenen induktivitätsbehafteten Stromversorgungsgerät 2 jeweils eine Feldstärke 52 erzeugt wird, die kleiner oder höchstens gleich der Sättigungsfeldstärke 104 ist. Damit werden die Blindströme auf die Größe 40 begrenzt, die bei einem Erreichen der Sättigung auftreten. Der Abschnitt 35 liegt dabei vorteilhafterweise zwischen 10 und 90 Grad. Durch diese Wahl mit einer dazwischenliegenden Ruhezeit kann die Magnetisierung wie eine Feder zurückschnellen und es tritt keine Integration der unipolaren Spannungsabschnitte und damit keine Magnetisierungsfeldstärke auf.

Die Anzahl der Halbwellen 32, d.h. die Anzahl der Anschaltungen, wird so groß gewählt, daß bei dem Abschnitt 35 vorgegebener Größe eine zu der Polung der Abschnitt 35 invertierte Remanenz 51 des induktivitätsbehafteten Stromversorgungsgerätes 2, d.h. der ungünstigste und in der Fig. 2 dargestellte Fall, sicher in die Magnetisierung gleicher Polung überführbar ist. Das bedeutet, daß bei dem vorgegebenen Abschnitt 35, der den maximalen Blindstrom 40 vorgibt, die Zahl der Abschnitte 35 voreingestellt wird, bis in einer oder mehreren Halbwellen 32 zu Ende des Zeitabschnittes 30 Blindströme 40 auftreten. Dies ist bei der Serienfertigung jeweils für einen Transformator 2 zu ermitteln und kann dann in der gesamten Serie voreingestellt werden.

Dabei wird durch die Vorgabe eines größeren Abschnittes 35 ein höherer Blindstrom 40 in Kauf genommen, wobei der Abschnitt 35 jeweils nicht die Feldstärke 52 über die Sättigungsfeldstärke 104 erhöhen sollte. Dabei wird gleichzeitig die Zeit bis zum Anschalten des Gerätes in der Gegenphase 41, d.h. die Anzahl der Abschnitte 31, verringert. Andersherum führt ein kleinerer Abschnitt 35 zu kleineren Blindströmen 40, sobald der Transformator 2 in Sättigung geht, es wird aber die Zeit verlängert, die zur sicheren Erreichung der positiven Remanenz 101 bei einem ungünstigen Ausgangspunkt wie in Fig. 1 einzustellen notwendig ist. Eine mögliche Zeit für die Zeitdauer 30 sind z.B. 0,5 Sekunden. Dies ergäbe somit eine Größenordnung von 25 Abschnitten 35.

Nach Ablauf der durch das Schaltmittel 12 vorgegebenen Zeit 30 kann auch mit der Phasenanschnittschaltung 19 ein Anschaltwinkel kleiner als 180 Grad, z.B. im Bereich von 150 bis 180 Grad zur Anschaltung in der Gegenphase und zum weiteren Betrieb erzeugt werden. Eine vollständige Anschaltung der Gegenphase ist nicht notwendig, wenn die weiteren Halbwellen ebenfalls kleiner als 180 Grad und in ihrem Winkelwert insbesondere kleiner als die gegenphasige Anschaltung sind.

Wenn dabei mit der Phasenanschnittschaltung 19 ein größerer Anschaltwinkel zur Anschaltung in der Gegenphase 41 erzeugbar ist und in der Phasenanschnittschaltung 19 bei den der gegenphasigen Halbwelle 41 folgenden Halbwellen jeweils ein Zündsignal bei einem vorbestimmten kleineren Phasenanschnittwinkel erzeugbar ist, dann kann eine solche Vorrichtung z.B. zum Dimmen verwendet werden.

Es kann in anderen Ausführungsformen vorgesehen sein, daß in der Phasenanschnittschaltung 19 bei den der gegenphasigen Halbwelle folgenden Halbwellen jeweils ein Zündsignal mit dem Steller 29 bei einem vorbestimmten Phasenanschnittwinkel erzeugbar ist, der nicht 180 Grad entspricht, d.h. es ist auch eine Speisung eines Verbrauchers 8 mit angeschnittenen Halbwellen möglich. Dabei muß insbesondere der erste gegenphasige Abschnitt größer als die folgenden Betriebsabschnitte sein, um die Hysterese um den Null-Punkt zu symmetrisieren.

Es ist auch eine Überbrückung der Thyristorschaltung 9 gemäß einer Einrichtung in DE 41 32 208 der Anmelderin möglich, bei der nach dem Volleinschalten die Thyristorschaltung durch ein Relais in dem Zeitabschnitt 35 überbrückt wird, wobei dann der Thyristor 9 für die gegenphasige Halbwellenanschaltung eingespart wird.

Der Betriebserkennungsschaltkreis 10 kann eine Spannungsvergleichsvorrichtung aufweisen, mit der durch einen Spannungsvergleich eine verringerte fehlerhafte Netzspannung detektierbar ist. Wenn eine solche fehlerhafte und kleinere Netzspannung 5 detektiert wird, wird dann das Schaltmittel 12 zu einem Neustart der Anschaltung neu verzögert eingeschaltet. Durch den Neustart wird sicher vermieden, daß die dann zwei aufeinanderfolgenden zu der fehlerhaften Netzspannungshalbwelle entgegengesetzt gepolten Halbwellen den Transformator 2 in die Sättigung treiben.

Natürlich sind die Prinzipien der Erfindung auch auf Drehstromgeräte übertragbar. Wenn das Stromversorgungsgerät ein Drehstromversorgungsgerät ist, wird für jeden oder mindestens zwei Zweige des Drehstromversorgungsgerätes jeweils ein Wechselstromschalter 9 zwischen dem Netz und dem Drehstromversorgungsgerät zwischengeschaltet, womit die Anschnittsteuerschaltung 19 parallel den einen Wechselstromschalter 9 mit den entsprechenden Schaltsignalen versorgt, und der andere Wechselstromschalter 9 nach einer z.B. in der WO91/17597 der Anmelderin beschriebenen Verzögerungszeit aktiviert wird.

## Patentansprüche

1. Verfahren zur Einschaltstromstoß-Vermeidung beim Einschalten eines mit einem Wechselstromschalter (9) in Reihe geschalteten induktivitätsbehafteten Stromversorgungsgerätes (2), bei dem mit einer Phasenanschnittschaltung (19) zur Verbindung des induktivitätsbehafteten Stromversorgungsgerätes (2) mit der Netzwechselspannung ab dem Einschaltmoment unipolare Spannungsabschnitte (31) erzeugt werden, wobei das induktivitätsbehaftete Stromversorgungsgerät (2) mit einer Abfolge von untereinander im wesentlichen gleich breiten unipolaren Spannungsabschnitten (31) angeschaltet wird,
**dadurch gekennzeichnet,**
daß die Breite der Spannungsabschnitte (31) so gewählt wird, daß die durch die unipolaren Spannungsabschnitte (31) erzeugte magnetische Feldstärke jeweils nicht über die Feldstärke (52), die der maximalen Betriebsinduktion (102) des induktivitätsbehafteten Stromversorgungsgerätes (2) entspricht, erhöht wird und daß nach einer vom induktivitätsbehafteten Stromversorgungsgerät (2) abhängigen vorbestimmten einstellbaren Anzahl von Anschaltungen mit den gleich breiten unipolaren Abschnitten, mit einer angeschnittenen Halbwelle, z.B. beim Dimmen, oder mit einer vollständigen Halbwelle (41) in der darauffolgenden Gegenphase ohne Messung des Blindstromes eingeschaltet wird.

2. Verfahren nach Anspruch 1, dadurch gekennzeichnet, daß die Anzahl der Anschaltungen so groß gewählt wird, daß bei dem Abschnitt vorgegebener Größe eine zu der Polung der Abschnitte invertierte 30 Remanenz des induktivitätsbehafteten Stromversorgungsgerätes beim Einschalten sicher in die Magnetisierung gleicher Polung überführbar ist.

3. Vorrichtung zur Einschaltstromstoß-Vermeidung beim Einschalten eines mit einem Wechselstromschalter (9) in Reihe geschalteten induktivitätsbehafteten Stromversorgungsgerätes (2) mit einer Phasenanschnittschaltung (19), durch die die Verbindung des induktivitätsbehafteten Stromversorgungsgerätes (2) mit der Netzwechselspannung (3, 4) über den Wechselstromschalter (9) ab dem Einschaltmoment (7) nur mit Zündsignalen für untereinander im wesentlichen gleich breite unipolare Phasenabschnitte (31) einstellbar ist, zur Durchführung des Verfahrens nach einem der Ansprüche 1 bis 3,
**dadurch gekennzeichnet,**
daß ein Schaltmittel (12) vorgesehen ist, mit dem das induktivitätsbehaftete Stromversorgungsgerät (2) nach einer durch das induktivitätsbehaftete Stromversorgungsgerät (2) vorbestimmten einstellbaren Anzahl (30) von Anschaltungen (31) mit den gleich breiten unipolaren Abschnitten (35) ohne Messung des Blindstromes in der Gegenphase (41) einschaltbar ist, wobei die Breite der Spannungsabschnitte (31) mittels eines Potentionmeters (24) so gewählt wird, daß die durch die unipolaren Spannungsabschnitte (31) erzeugte magnetische Feldstärke jeweils nicht über die Feldstärke (52), die der maximalen Betriebsinduktion (102) des induktivitätsbehafteten Stromversorgungsgerätes (2) entspricht, erhöht wird.

4. Vorrichtung nach Anspruch 3, dadurch gekennzeichnet, daß nach Ablauf der durch das Schaltmittel (12) vorgegebenen Zeit (30) mit der Phasenanschnittschaltung 25 (19) ein größerer Abschnittwinkel zur Anschaltung in der Gegenphase (41) erzeugbar ist und daß in der Phasenanschnittschaltung (19) bei den der gegenphasigen Halbwelle (41) folgenden Halbwellen jeweils ein Zündsignal bei einem vorbestimmten kleineren Phasenanschnittwinkel erzeugbar ist.

5. Vorrichtung nach Anspruch 3 oder Anspruch 4, dadurch gekennzeichnet, daß das Schaltmittel (12) ein Zeitschaltglied ist, mit dem eine Vorlaufzeit (30) einstellbar ist, in der die gewünschte Anzahl der Abfolge von den im wesentlichen gleich großen unipolaren Anschaltabschnitten (35) erzeugbar ist.

6. Vorrichtung nach einem der Ansprüche 3 bis 5, dadurch gekennzeichnet, daß ein Betriebserkennungsschaltkreis (10) vorgesehen ist, mit dem das Schaltmittel (12) verzögert einschaltbar ist, um mit der Phasenanschnittschaltung (19) die gleich großen unipolaren Anschaltabschnitte (35) zu erzeugen.

7. Vorrichtung nach Anspruch 6, dadurch gekennzeichnet, daß mit dem Betriebserkennungsschaltkreis (10) durch einen Spannungsvergleich eine verringerte fehlerhafte Netzspannung detektierbar ist, wobei dann das Schaltmittel (12) zu einem Neustart der Anschaltung neu verzögert einschaltbar ist.

8. Vorrichtung nach einem der Ansprüche 3 bis 7, dadurch gekennzeichnet, daß das Stromversorgungsgerät ein Drehstromversorgungsgerät ist, und das für jeden oder mindestens zwei Zweige des Drehstromversorgungsgerätes jeweils ein Wechselstromschalter (9) zwischen dem Netz und dem Drehstromversorgungsgerät zwischengeschaltet ist.

## Claims

1. Method of avoiding a current inrush when an inductance-loaded power supply unit (2) is switched on, which is connected in series with an a.c. switch (9), wherein unipolar voltage sections (31) are generated by means of a phase sectioning circuit (19) for connecting said inductance-loaded power supply unit (2) to the alternating mains voltage from the switch-on moment onwards, with said inductance-loaded power supply unit (2) being switched on with a succession of unipolar voltage sections (31) of substantially equal widths,
**characterised in**
that the width of said voltage section (31) is so selected that the magnetic field strength, which is generated by said unipolar voltage sections (31) will not be increased above the field strength (52) which corresponds to the maximum operating inductance (102) of said inductance-loaded power supply unit (2), and that after a predetermined settable number of switch-on operations with said unipolar sections of equal width, which number depends on said inductance-loaded power supply unit (2), the circuit is switched on with a sectioned half-wave, e.g. for dimming, or with a complete half-wave (41) during the phase opposition then following, without measuring the reactive current.

2. Method of according to Claim 1, **characterised** in that the number of switch-on operations is selected to be so great that at the section of predetermined size a remanence which is inverted relative to the polarity of the sections of said inductance-loaded power supply unit may be reliably passed over into the homopolar magnetisation when the system is switched on.

3. Device for avoiding a current inrush when an inductance-loaded power supply unit (2) is switched on, which is connected in series with an a.c. switch (9), including a phase sectioning circuit (19) for setting the connection of said inductance-loaded power supply unit (2) with the alternating mains voltage (3, 4) via the a.c. switch (9) from the switch-on moment (7) onwards only with firing signals for unipolar voltage sections (31) of substantially equal widths, for carrying through the method according to any of Claims 1 and 2,
**characterised in**
that switching means (12) are provided which may be used to switch on said inductance-loaded power supply unit (2) after a Seattle number (30) of switch-on operations (31), which is determined by said inductance-loaded power supply unit (2), with said unipolar sections (35) of equal widths, without measuring the reactive current in phase opposition (41), wherein the width of said voltage sections (31) is selected by means of a potentiometer (24) in a way that the magnetic field strength created by said unipolar voltage sections (31) will not be increased above the field strength (52) corresponding to the maximum operating inductance (102) of said inductance-loaded power supply unit (2).

4. Device according to Claim 3, **characterised** in that upon expiration of the period (30) predetermined by said switching means (12) a wider sectioning angle may be generated by means of said phase sectioning circuit (19) for switch-on in phase opposition (41), and that a firing signal may be generated at a predetermined smaller phase sectioning angle in said phase sectioning circuit (19) at each of the half-waves following the antiphase half-wave (41).

5. Device according to Claim 3 or Claim 4, **characterised** in that said switching means (12) is a timer element suitable to set a leading interval (30) during which the desired number of the succession of substantially equal unipolar switch-on sections (35) may be generated.

6. Device according to any of Claims 3 to 5, **characterised** in that an operation detector circuit (10) is provided which may be used to switch on said switching means (12) with a delay for generating said equal unipolar switching sections (35) by means of said phase sectioning circuit (19).

7. Device according to Claim 6, **characterised** in that a reduced faulty mains voltage may be detected by voltage comparison by means of said operation detector circuit (10), with said switching means (12) being adapted for switch-on with a delay for restart of the switch-on operation.

8. Device according to any of Claims 3 to 7, **characterised** in that said power supply unit is a three-phase power supply, and that for each branch or at least two branches of said three-phase power supply a respective a.c. switch (9) is interposed between the mains and said three-phase power supply.

## Revendications

1. Procédé à éviter des coups de courant d'entrée quand un bloc d'alimentation à inductance (2) est mis en circuit, qui est branché en série à un commutateur à courant alternatif (9), dans lequel des sections de tension unipolaire (31) sont engendrées moyennant un circuit de réglage de phase (19) pour la connexion dudit bloc d'alimentation à inductance (2) à la tension alternative de réseau à partir du moment de connexion, ledit bloc d'alimentation à inductance (2) étant mis en circuit par une succession de sections de tension unipolaire (31) à largeur essentiellement égale,
**caractérisé en ce**
que la largeur de ladite section de tension (31) est choisie de façon que l'intensité du champ magnétique, qui est engendrée par lesdites sections de tension unipolaire (31), ne soit pas augmentée au dessus de l'intensité de champ (52) qui correspond à l'inductance de service maximale (102) dudit bloc d'alimentation à inductance (2), et en ce qu'après un nombre réglable spécifié des opérations de mise en circuit moyennant desdites sections unipolaires à largeur égale, qui dépend dudit bloc d'alimentation à inductance (2), le circuit est connecté par une demi-onde réglée en phase, par exemple pour varier la lumière, ou par une demi-onde complète (41) au course de la section à opposition en phase suivante, sans mesure du courant réactif.

2. Procédé selon la revendication 1, **caractérisé en ce** que le nombre des opérations de mise en circuit est choisi de façon qu'il soit si grand qu'à la section de grandeur spécifiée une rémanence inverse relativement à la polarité des sections dudit bloc d'alimentation à inductance peut sûrement commuter à une aimantation homopolaire quand le système est mis en circuit.

3. Dispositif à éviter des coups de courant d'entrée quand un bloc d'alimentation à inductance (2) est mis en circuit, qui est branché en série à un commutateur à courant alternatif (9), comprenant un circuit de réglage de phase (19) pour régler la connexion dudit bloc d'alimentation à inductance (2) moyennant la tension alternative de réseau (3, 4) via ledit commutateur à courant alternatif (9) à partir du moment de connexion (7) seulement par des signaux d'amorçage pour des sections de tension unipolaire (31) à une largeur essentiellement égale, pour la réalisation du procédé selon une quelconque des revendications 1 et 2,
**caractérisé en ce**
qu'un moyen commutateur (12) est disposé, qui est approprié à l'emploi pour mettre en circuit ledit bloc d'alimentation à inductance (2) après un nombre réglable spécifié (30) des opérations de mise en circuit (31), qui est déterminé par ledit bloc d'alimentation à inductance (2), moyennant lesdites sections unipolaires (35) à largeur égale, sans mesure du courant réactif en opposition de phase (41), dans lequel la largeur desdites sections de tension (31) est choisie moyennant un potentiomètre (24) de façon que l'intensité du champ magnétique, qui est engendré par lesdites sections de tension unipolaire (31) ne soit pas élevée au dessous de l'intensité du champ magnétique, qui corresponde à l'inductance de service maximale (102) dudit bloc d'alimentation à inductance (2).

4. Dispositif selon la revendication 3, **caractérisé en ce** qu'au bout de la période (30) déterminée par ledit nombre (30) des opérations de mise en circuit, qui est défini moyennant ledit moyen commutateur (12), on peut engendrer un plus large angle de réglage de phase moyennant ledit circuit de réglage de phase (19) pour la mise en circuit en opposition de phase (41), et en ce qu'un signal d'amorçage peut être engendré à un plus petit angle de réglage de phase spécifié dans ledit circuit de réglage de phase (19) à chacune des demi-ondes qui suivent la demi-onde en opposition de phase (41).

5. Dispositif selon la revendication 3 ou 4, **caractérisé en ce** que ledit moyen commutateur (12) est un système de temporisation approprié à déterminer un intervalle en avance (30), au cours duquel le nombre souhaité desdites sections de commutation unipolaires essentiellement égales (35) en succession peut être engendré.

6. Dispositif selon une quelconque des revendications 3 à 5, **caractérisé en ce** qu'un circuit détecteur de service (10) est utilisé, qui est propre à mettre en circuit ledit moyen commutateur (12) de façon temporisée afin d'engendrer lesdites sections de commutation unipolaires égales (35) moyennant ledit circuit de réglage de phase (19).

7. Dispositif selon la revendication 6, **caractérisé en ce** qu'une tension de réseau incorrecte réduite peut être détectée par une comparaison des tensions moyennant ledit circuit détecteur de service (10), ledit moyen commutateur (12) étant approprié à la mise en circuit de façon temporisée afin de relancer l'opération de mise en circuit.

8. Dispositif selon une quelconque des revendications 3 à 7, **caractérisé en ce** que ledit bloc d'alimentation est un bloc à courant triphasé, et en ce qu'un commutateur à courant alternatif (9) respectif est branché pour chaque branche, ou au moins deux branches, dudit bloc à courant triphasé, entre le secteur et ledit bloc à courant triphasé.
